# EUROPEAN PATENT APPLICATION

(11) **EP 4 354 716 A1**
(43) Date of publication of application: **17.04.2024**
(21) Application number: 23203058.5
(22) Date of filing: 11.10.2023
(51) Int. Cl.: H02M 1/00, H02M 3/07, H02M 3/325

(54) **HOLDUP CAPACITOR CHARGING USING SINGLE SWITCH FORWARD CONVERTER**

(30) Priority: 12.10.2022 IN 202241058017
(71) Applicant: Goodrich Aerospace Services Private Limited, 560048 Bangalore (IN)
(72) Inventor: Veerasamy, Vasudevan, 600017 Chennai (IN); Sridhar, Katakam, 560036 Bangalore (IN)
(74) Representative: Dehns

(57) **Abstract**

A power converter system includes a first transformer winding, L1, A switch is operatively connected between the first transformer winding, L1, and ground for controlling the first transformer winding, L1. A holdup charging circuit (104) includes a clamp circuit (106) connected between a first node on a first side of the first transformer winding, L1, and a second node on a second side of the first transformer winding, L1. The clamp circuit (106) includes a clamp diode oriented to let current flow through the clamp circuit (106) in a direction from the first node to the second node. The clamp circuit (106) includes a clamp capacitor in series between the clamp diode and the second node. A holdup circuit, including a holdup capacitor, is connected to a third node in the clamp circuit (106) between the clamp diode and the clamp capacitor.

## Description

### BACKGROUND

### 1. Field

The present disclosure relates to power converters, and more particularly to holdup capacitors for power converters.

### 2. Description of Related Art

Traditionally holdup capacitor charging is implemented using a separate regulator circuit or using an additional secondary winding from the main power supply regulator.

The conventional techniques have been considered satisfactory for their intended purpose. However, there is an ever present need for improved systems and methods for charging holdup capacitors. This disclosure provides a solution for this need.

### SUMMARY

A power converter system includes a first transformer winding. A second transformer winding is operatively connected to be powered by the first transformer winding. A switch is operatively connected between the first transformer winding and ground for controlling the first transformer winding. A holdup charging circuit includes a clamp circuit connected between a first node on a first side of the first transformer winding and a second node on a second side of the first transformer winding. The clamp circuit includes a clamp diode oriented to let current flow through the clamp circuit in a direction from the first node to the second node. The clamp circuit includes a clamp capacitor in series between the clamp diode and the second node. A holdup circuit is connected to a third node in the clamp circuit between the clamp diode and the clamp capacitor. The holdup circuit includes a holdup diode connected in series between the third node and a holdup capacitor. The holdup circuit includes the holdup capacitor connected in series between the holdup diode and ground.

The second transformer winding can be included in a regulator secondary side circuit configured to output regulated power using power input to the first transformer winding. The regulator secondary side circuit can include the second transformer winding connecting between ground and a first regulator diode. An inductor can be connected in series between the first regulator diode and a resistor. The resistor can be connected to ground. A second regulator diode can connect a node between the first regulator diode and the inductor to the ground node. A capacitor can connect a node between the inductor and the resistor to the ground node.

A voltage source can be connected between ground and the first node. A reset transformer winding can connect between the first node and ground. A reset diode can be connected in series between the reset transformer winding and ground. A control power system can selectively connect power to the switch to control the first transformer winding. The clamp diode can be a normal PN diode or a Schottky diode. The holdup diode can be oriented to allow current flow therethrough in a direction from the third node to ground.

A method in a system as described above includes in a startup period, charging the holdup capacitor with current from a voltage source connected between ground and the first node. In an ON period after the startup period, the method includes charging the clamp capacitor, while charging the first transformer winding with the switch controlled to be ON. In an OFF period after the ON period, the method includes charging the holdup capacitor with the switch controlled to be OFF. The method includes repeatedly cycling between the ON and OFF periods to power a regulator circuit through the second transformer winding.

Fully charging the holdup capacitor can begin in the startup period and can continue through a plurality of cycles of repeatedly cycling between the ON and OFF periods. Fully charging the holdup capacitor can include charging the holdup capacitor to a voltage up to three times that of the voltage source.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a circuit diagram of an embodiment of a power converter system constructed in accordance with the present disclosure, showing the holdup charging circuit;
Fig. 2 is a circuit diagram of the system of Fig. 1, showing current flow charging the holdup capacitor during a startup period;
Fig. 3 is a circuit diagram of the system of Fig. 1, showing current flow charging the clamping capacitor during an ON period of the switch; and
Fig. 4 is a circuit diagram of the system of Fig. 1, showing current flow during an OFF period and the charging of the holdup capacitor.

### DETAILED DESCRIPTION OF THE PREFERRED EMBODIMENTS

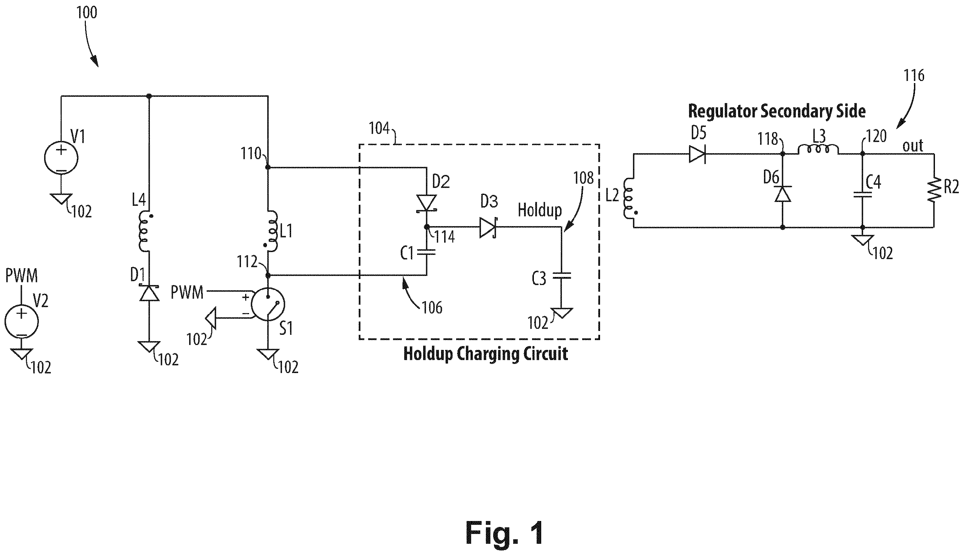

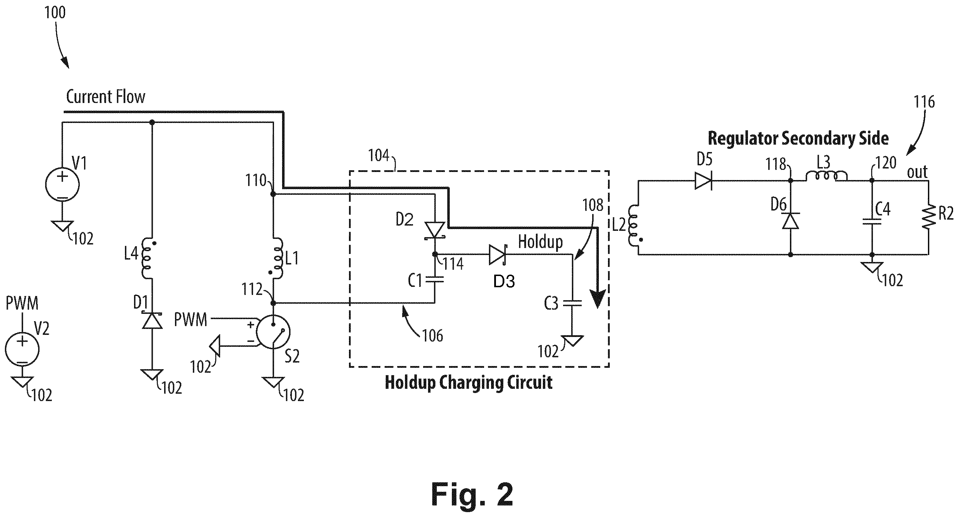

Reference will now be made to the drawings wherein like reference numerals identify similar structural features or aspects of the subject disclosure. For purposes of explanation and illustration, and not limitation, a partial view of an embodiment of a power converter system in accordance with the disclosure is shown in Fig. 1 and is designated generally by reference character 100. Other embodiments of systems in accordance with the disclosure, or aspects thereof, are provided in Figs. 2-4, as will be described. The systems and methods described herein can be used to charge a holdup capacitor for use in supplying power in the event of an interruption of adequate voltage from a power source in power conversion. This disclosure adds a diode based voltage doubler circuit across the primary winding of a power transformer.

The power converter system 100 includes a first transformer winding L1. A second transformer winding L2 is operatively connected to be powered by the first transformer winding L1, wherein the first and second transformer windings L1 and L2 form a transformer. A switch S1 is operatively connected in series between the first transformer winding L1 and ground 102 for controlling the first transformer winding L1. A holdup charging circuit 104 includes a clamp circuit 106 connected between a first node 110 on a first side of the first transformer winding L1 and a second node 112 on a second side of the first transformer winding L1. The clamp circuit 106 includes a clamp diode D2 oriented to only let current flow through the clamp circuit in a direction from the first node 110 to the second node 112. Diodes D1, D2, and D3 are Schottky diodes, but can be any suitable PN Junction diodes. The clamp circuit 106 includes a clamp capacitor C1 in series between the clamp diode D2 and the second node 112. A holdup charging circuit 108 is connected to a third node 114 in the clamp circuit 106 between the clamp diode D2 and the clamp capacitor C1. The holdup charging circuit 108 includes a holdup diode D3 connected in series between the third node 114 and the holdup capacitor C3, which is connected in series between the holdup diode D3 and ground.

The second transformer winding L2 is included in a regulator secondary side circuit 116 configured to output regulated power using power input to the first transformer winding L1 transformed into power into the second transformer winding L2. The regulator secondary side circuit 116 includes the second transformer winding L2 connecting between ground 102 and a first regulator diode D5 oriented to allow current flow from the second transformer winding L2 to an inductor L3 that is connected in series between the first regulator diode D5 and a resistor R2. The ground 102 in circuit 116 can be different from primary side ground 102 of the holdup charging circuit 108 in certain applications. The inductor L3 does not form part of the transformer with the first and second transformer windings L1 and L2. The resistor R2 is connected to ground. The second inductor L2 is connected to a ground node. A second regulator diode D6 connects a node 118 between the first regulator diode D5 and the inductor L3 to the ground node 102, and is oriented to enable current flow in the inductor L3 during the OFF period of the switch S1. A capacitor C4 connects a node 120 between the inductor L3 and the resistor R2 to the ground node.

A voltage source V1 is connected between ground 102 and the first node 110. A reset transformer winding L4 connects between the first node 110 and ground 102, and forms part of the transformer with the first and second transformer windings L1 and L2, e.g. for resetting the transformer. A reset diode D1 is connected in series between the reset transformer winding L4 and ground 102, oriented to enable reset current to flow from the ground 102 to the transformer winding L4 during the OFF period of the switch S 1.

A control power system V2, e.g. with pulse width modulated (PWM) signal control, selectively connects power to the switch S1 to control the first transformer winding L1. The holdup diode D3 is oriented to allow current flow therethrough only in a direction from the third node 114 to the holdup capacitor C3.

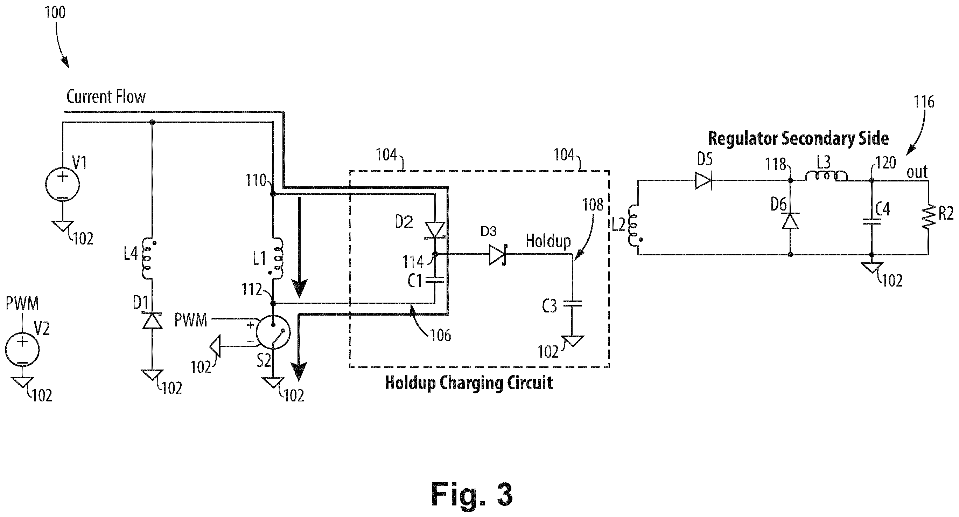

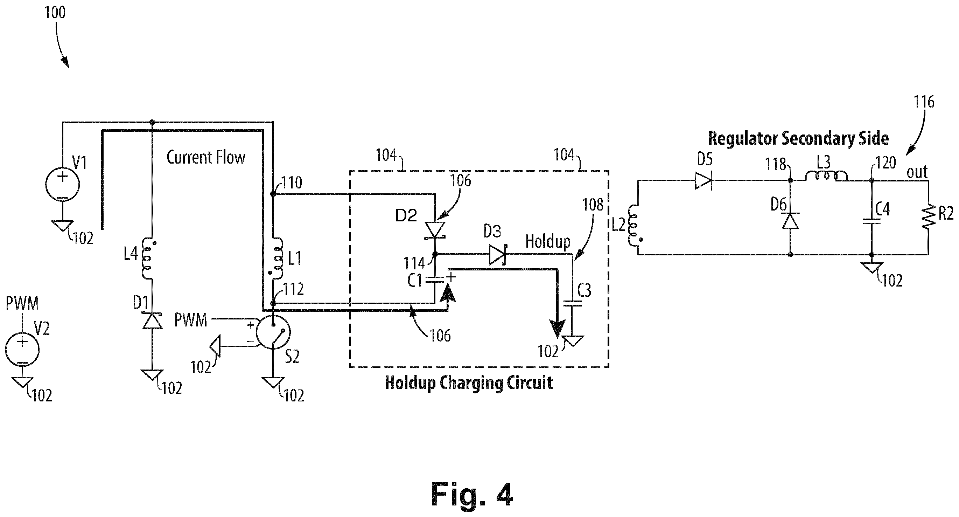

With reference now to Figs. 2-4, a method in a system 100 as described above includes in a startup period shown in Fig. 2, charging the holdup capacitor C3 with current from a voltage source V1 connected between ground 102 and the first node 110. It does not matter if the switch S1 is ON or OFF during the startup period. In an ON period after the startup period, shown in Fig. 3, the method includes charging the clamp capacitor C1, while charging the first transformer winding L1 with the switch S1 controlled to be ON. The claim capacitor C1 is charged to the voltage equal to the input voltage Vin. As shown in Fig. 4, in an OFF period after the ON period of Fig. 3, the method includes charging the holdup capacitor C3 with the switch S1 controlled to be OFF. During this period the voltage across first transformer winding L1 (from node 112 to node 110) is equal to the input voltage Vin. This is achieved because the reset winding L4 and reset diode D1 ensure the voltage across the first transformer winding L1 to be same as the input voltage Vin. Now the input voltage source V1, first transformer winding L1, and clamp capacitor C1 form an equivalent of three voltage sources in series (each having voltage equal to Vin) which are now parallel to the Holdup capacitor C3. These three voltage sources charge the holdup capacitor C3 to three times the Vin voltage. The method includes repeatedly cycling between the ON and OFF periods to power a regulator circuit 116 through the second transformer winding L2.

Fully charging the holdup capacitor C3 begins in the startup period of Fig. 2 and continues through a plurality of cycles of repeatedly cycling between the ON and OFF periods of Figs. 3-4. Fully charging the holdup capacitor C3 includes charging the holdup capacitor C3 to a voltage three times that of the voltage source V1.

During startup, the holdup capacitor C3 will charge to Vin voltage, e.g. with 2X diode drop. The time taken for this stage is only limited by any trace resistance and diode resistance. The current flow is in the direction shown by the large arrow in Fig. 2.

During the (PWM) ON period, the current flows as indicated by the large arrow in Fig. 3, thereby charging the clamp capacitor C1 to Vin. The current also flows through the primary winding L1 of the transformer.

During the (PWM) OFF period, the holdup capacitor C3 is charged. The input voltage Vin, the voltage across the first transformer winding L1 and the voltage held up by the clamp capacitor C1 can charge the holdup capacitor C3. The voltage across the winding L1 is equal to Vin as this winding usually has same inductance as the reset winding L4. Also during the ON period the clamp capacitor C1 is also charged to Vin. The holdup capacitor C3 is therefore charged to (3 times Vin) - diode drop. However if needed, the holdup capacitor C3 can be charged to voltage less than 3 times the Vin by using a separate control circuit.

Charging the holdup capacitor C3 can take a few ON/OFF cycles, e.g. 50-60 cylcles. Each specific application can have its own size for the holdup capacitor C3. The bigger the capacitance of the holdup capacitor C3 is, the more cycles it takes to charge.

Potential benefits of the systems and methods disclosed herein include the following. There is no need for auxiliary windings or separate boost converter circuits. There can be a cost reduction and area reduction. The systems and methods disclosed herein can be easier to implement than in traditional systems and methods.

The methods and systems of the present disclosure, as described above and shown in the drawings, provide for charging a holdup capacitor for use in supplying power in the event of an interruption of adequate voltage from a power source in power conversion. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A power converter system comprising:
a first transformer winding, L1;
a second transformer winding, L2, operatively connected to be powered by the first transformer winding, L1;
a switch, S1, operatively connected between the first transformer winding, L1, and ground for controlling the first transformer winding, L1; and
a holdup charging circuit (104) including:
a clamp circuit (106) connected between a first node on a first side of the first transformer winding, L1, and a second node on a second side of the first transformer winding, L1,, wherein the clamp circuit (106) includes a clamp diode oriented to let current flow through the clamp circuit (106) in a direction from the first node to the second node, wherein the clamp circuit (106) includes a clamp capacitor in series between the clamp diode and the second node; and
a holdup circuit connected to a third node in the clamp circuit (106) between the clamp diode and the clamp capacitor, wherein the holdup circuit includes a holdup diode connected in series between the third node and a holdup capacitor, and wherein the holdup circuit includes the holdup capacitor connected in series between the holdup diode and ground.

2. The system as recited in claim 1, wherein the second transformer winding, L2, is included in a regulator secondary side circuit configured to output regulated power using power input to the first transformer winding, L1.

3. The system as recited in claim 2, wherein the regulator secondary side circuit includes:
the second transformer winding, L2, connecting between ground and a first regulator diode,
an inductor connected in series between the first regulator diode and a resistor, wherein the resistor is connected to ground, and wherein the second inductor is connected to a ground node;
a second regulator diode connecting a node between the first regulator diode and the inductor to the ground node; and
a capacitor connecting a node between the inductor and the resistor to the ground node.

4. The system as recited in any preceding claim, further comprising a voltage source connected between ground and the first node.

5. The system as recited in claim 4, further comprising a reset transformer winding connecting between the first node and ground, and a reset diode connected in series between the reset transformer winding and ground.

6. The system as recited in any preceding claim, further comprising a control power system selectively connecting power to the switch to control the first transformer winding, L1.

7. The system as recited in any preceding claim, wherein the clamp diode is a PN diode.

8. The system as recited in any preceding claim, wherein the clamp diode is a Schottky diode.

9. The system as recited in any preceding claim, wherein the holdup diode is oriented to allow current flow therethrough in a direction from the third node to ground.

10. A method comprising:
in a system as recited in any preceding claim:
in a startup period, charging the holdup capacitor with current from a voltage source connected between ground and the first node;
in an ON period after the startup period, charging the clamp capacitor, while charging the first transformer winding, L1, with the switch controlled to be ON;
in an OFF period after the ON period, charging the holdup capacitor with the switch controlled to be OFF; and
repeatedly cycling between the ON and OFF periods to power a regulator circuit through the second transformer winding, L2.

11. The method as recited in claim 10, wherein fully charging the holdup capacitor begins in the startup period and continues through a plurality of cycles of repeatedly cycling between the ON and OFF periods.

12. The method as recited in claim 10 or 11, wherein fully charging the holdup capacitor includes charging the holdup capacitor to a voltage up to three times that of the voltage source.
